Europäisches Patentamt

European Patent Office

Office européen des brevets

(11) Veröffentlichungsnummer: **0 243 714**
**B1**

(12) **EUROPÄISCHE PATENTSCHRIFT**

(45) Veröffentlichungstag der Patentschrift:
27.06.90

(51) Int. Cl.⁵: **F16F 13/00, B60K 5/12**

(21) Anmeldenummer: **87104895.5**

(22) Anmeldetag: **02.04.87**

(54) Zweikammerstützlager mit hydraulischer Dämpfung, insbesondere Motorlager in Kraftfahrzeugen.

(30) Priorität: **26.04.86 DE 3614162**

(43) Veröffentlichungstag der Anmeldung:
**04.11.87 Patentblatt 87/45**

(45) Bekanntmachung des Hinweises auf die Patenterteilung:
**27.06.90 Patentblatt 90/26**

(84) Benannte Vertragsstaaten:
**ES FR GB IT SE**

(56) Entgegenhaltungen:
EP-A- 0 014 742
EP-A- 0 163 162
EP-A- 0 163 162
EP-A- 0 163 817
EP-A- 0 163 949
DE-A- 3 436 534
GB-A- 2 164 416

(73) Patentinhaber: **Lemförder Metallwaren AG,**
**Postfach 1220, D-2844 Lemförde(DE)**

(72) Erfinder: **Jördens, Ernst-Günter, Geranienweg 29,**
**D-2845 Damme(DE)**
Erfinder: **Sprute, Johannes, Hegerstrasse 24,**
**D-4500 Osnabrück(DE)**

(74) Vertreter: **Bruse, Willy Hans Heinrich, Edisonstrasse 14,**
**D-2800 Bremen 33(DE)**

ACTORUM AG

**Beschreibung**

Die Erfindung betrifft ein Zweikammerstützlager mit hydraulischer Dämpfung, insbesondere ein Motorlager in Kraftfahrzeugen, mit Gattungsmerkmalen nach dem Patentanspruch 1.

Motorlager mit diesen Merkmalen sind aus der DE-OS 3 410 781 bekannt. Bei dieser bekannten Anordnung besteht die Beulfeder aus einem Ring eines elastischen Werkstoffes, der zwischen einem inneren Kern und einem äußeren Befestigungsring angeordnet ist, so daß der innere Kern bei Schwingungen mit sehr kleinen Amplituden gegen den umgebenden atmosphärischen Druck ausweichen kann. Die Dämpfungscharakteristik dieses Lagers ist dadurch einstellbar, daß der Düsenkanal durch gegeneinander offene Ausnehmungen in zwei gegeneinander um eine Hochachse verdrehbaren Scheiben eines starren Bodens zwischen der obenliegenden Arbeitskammer und der darunter angeordneten Ausgleichskammer gebildet ist, die beim Einbau des Lagers in eine auf individuelle Dämpfung ausgerichtete Stellung zueinander gebracht werden. Eine erneute Einstellung ist nur nach einer Demontage möglich.

Die DE-OS 3 436 534 beschreibt ein hydraulisch dämpfendes Motorlager gleicher Gattung, bei dem die Trennwand zwischen den beiden Kammern eine Drosselscheibe aufweist, die am Rand mit einem Axialspiel eingespannt und bei der das Axialspiel der Scheibeneinspannung von außen regelbar ist.

Bei einer anderen bekannten Ausbildung entsprechend der DE-OS 3 421 137 ist eine am Rande elastisch eingespannte Trennwand zwischen den beiden Kammern durch ein Ventil mit einer Tilgermasse kuppelbar, die aus einem Flüssigkeitspolster besteht.

Bekannt sind schließlich Düsenkanäle zwischen den beiden Kammern eines Motorlagers mit elektronisch permanent regelbarer Durchflußmenge zur Beeinflussung der Dämpfungscharakteristik des Motorlagers. Der erforderliche technische Aufwand übersteigt jedoch bei weitem die Kosten eines Lagers nach der zuerst erwähnten Druckschrift.

Der Erfindung liegt die Aufgabe zugrunde, bei Zweikammerstützlagern der genannten Gattung das Ausbeulverhalten der Beulfeder permanent regeln zu können.

Diese Aufgabe löst die Erfindung durch die Ausbildungsmerkmale nach dem Kennzeichen des Patentanspruches 1.

Durch Veränderung der wirksamen Beulfläche der Beulfeder kann eine Anpassung der Dämpfungscharakteristik an wechselnde Betriebszustände während des Fahrzeugbetriebes durchgeführt werden. Dazu können gegebenenfalls Sensoren im Fahrzeug den Betriebszustand mittels Stellglieder auf das Regelorgan für das Verhalten der Beulfeder im Lager übertragen. Auch eine Anpassung von Hand an ein gewünschtes Verhalten ist dadurch jederzeit möglich.

Zweckmäßig besteht die Beulfeder aus einer runden Membranscheibe, deren Einspannung am Rande im Durchmesser über ein Stellglied von außen veränderbar ist. Durch Veränderung des Einspanndurchmessers kann somit die ausbeulbare Fläche der Beulfeder bestimmt werden. In weiterer Ausgestaltung der Erfindung ist die Beulfeder am Rand zwischen zwei axial im Abstand zueinander einstellbaren Druckringen eingespannt, wobei die Spannflächen der beiden Druckringe mit der Mittelebene der als Membranscheibe ausgebildeten Beulfeder einen mit dem Scheitel nach außen weisenden Winkel einschließen. Vorteilhaft sind im Querschnitt gekrümmte Spannflächen der Druckringe, wobei der Abstand von der Mittelebene der Membranscheibe von außen nach innen zunimmt. Der eine Druckring ist dabei in dem Gehäuse fest verankert, während der andere Druckring mittels einer Schraube von außen gegen den festen Druckring verstellbar ist. Durch die Oberflächenkontur der die Membranscheibe berührenden Spannflächen kann somit der Einspanndurchmesser variiert werden, um das Beulverhalten der Membranscheibe zu beeinflussen. Für die Betätigung ist nach einem weiteren Gedanken eine Schraube mit einem seitlich herausragenden Betätigungsorgan vorgesehen, an welches entweder selbsttätig wirksame Regelglieder oder ein Gestänge zur Beeinflussung von Hand angelenkt sein können.

Auf der Zeichnung ist ein Ausführungsbeispiel der Erfindung dargestellt. Es zeigen:

Figur 1 einen vertikalen Schnitt durch ein Zweikammerstützlager,

Figur 2 ein Regelschaubild der Schwingungsphase über der Frequenz und

Figur 3 ein Regelschaubild der Federkonstanten C-dyn zu C-Tragkörper aufgetragen über der Frequenz.

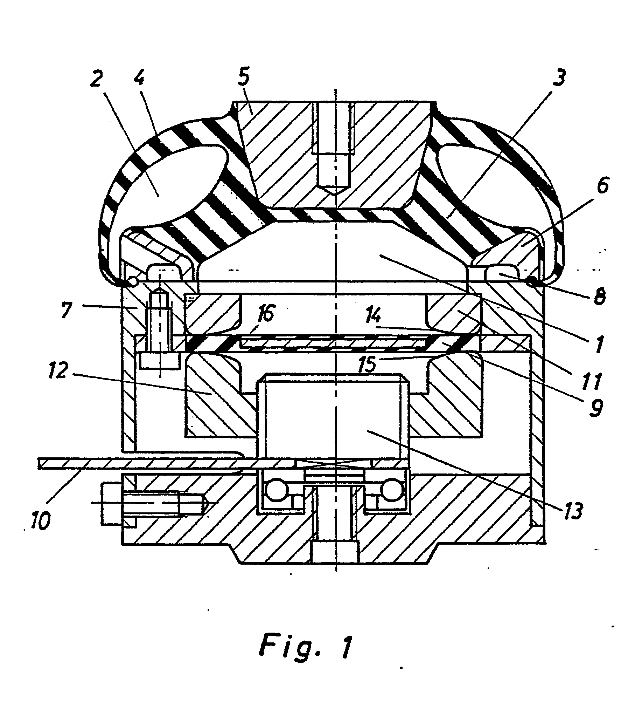

Das Ausführungsbeispiel in der Figur 1 zeigt ein Zweikammerstützlager mit hydraulischer Dämpfung, insbesondere ein Motorlager in Kraftfahrzeugen, dessen mit Flüssigkeit gefüllte Arbeitskammer 1 und Ausgleichskammer 2 Wandungen 3 und 4 aus ringförmigen Gummimembranen aufweisen. Dabei erstreckt sich die Ausgleichskammer 2 ringförmig um eine mittige Arbeitskammer 1 herum, so daß die die Wandungen 3 und 4 bildenden Gummimembranen einstückig ausgebildet sein können. Dieser Gummikörper ist mit dem oberen zentral angeordneten Tragelement 5 festhaftend verbunden, welches am Motor oder an einem anderen abzustützenden Teil befestigbar ist. Die die Wandung 3 der Arbeitskammer 1 bildende Gummimembran ist mit ihrem freien Ende festhaftend mit einem zweiten Tragkörper 6 verbunden, welcher mit einem ringförmigen Bodenteil 7 der Arbeitskammer verschraubbar ist und in der Teilungsebene eine ringförmige Ausnehmung 8 aufweist, die den Düsenkanal zwischen den beiden Kammern 1 und 2 bildet. Die die Wandung 4 bildende Gummimembran der Ausgleichskammer ist mit ihrem freien Rand zwischen dem Tragkörper 6 und dem Bodenteil 7 eingeklemmt.

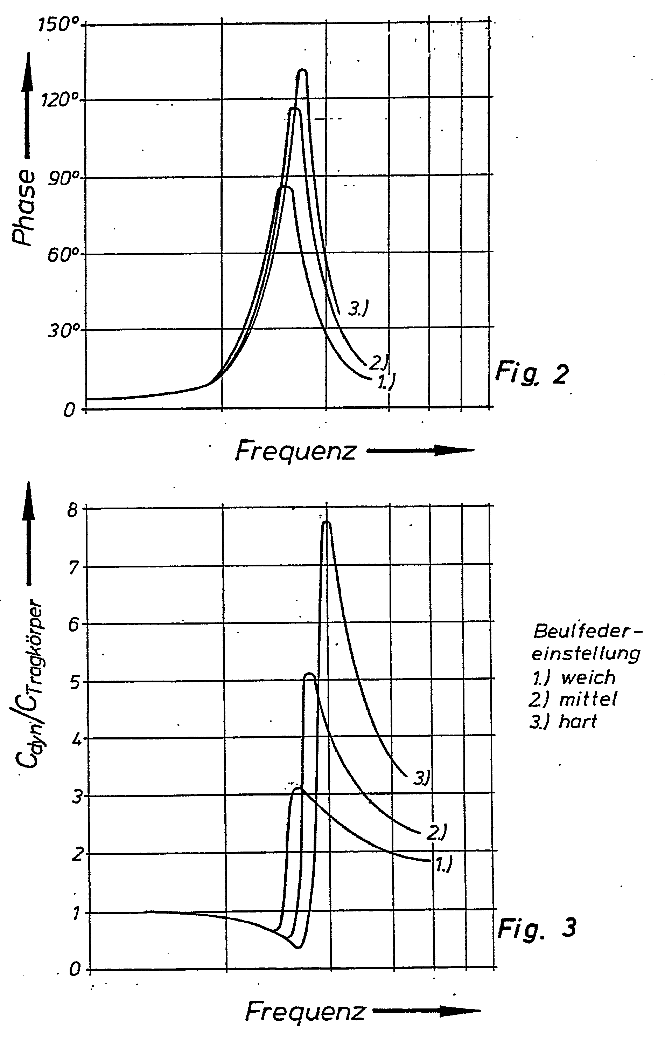

In diesem Bodenteil 7 ist eine Beulfeder 9 aus einer runden Membranscheibe angeordnet, deren Einspannung am Rande im Durchmesser über ein Stellglied 10 von außen veränderbar ist. Diese Beulfeder 9 ist am Rande zwischen zwei axial im Abstand zueinander einstellbaren Druckringen 11 und 12 eingespannt. Der eine Druckring 11 ist fest im Bodenteil 7 angeordnet, während der andere Bodenteil 12 mittels einer Schraube 13 in Richtung seiner Hochachse gegen den Druckring 11 verstellbar ist. Die Spannflächen 14 und 15 der beiden Druckringe 11 und 12 schließen mit der Mittelebene der Beulfeder 9 einen mit dem Scheitel nach außen weisenden Winkel ein. Vorteilhaft ist eine gekrümmte Ausbildung dieser Spannflächen in der Weise, daß der zwischen den Spannflächen 14 und 15 verbleibende Abstand voneinander von außen nach innen größer wird, d.h. der Abstand der gekrümmten Spannflächen von der Mittelebene der Beulfeder 9 nimmt von außen nach innen zu. Durch Verdrehen der Schraube 13 mittels des Stellgliedes 10 kann der Druckring 12 gegen den festen Druckring 11 bewegt werden, um dadurch den Einspanndurchmesser der Beulfeder 9 zu verringern bzw. bei umgekehrter Bewegung des Druckringes 12 zu vergrößern. Die dadurch bewirkte Veränderung der Beulsteifigkeit der Membranwandungen der Arbeitskammer 1 ist in den Schaubildern entsprechend Figur 2 und Figur 3 dargestellt. Bei annähernd gleicher Frequenz kann durch Verstellung des Druckringes 12 eine unterschiedliche Schwingungsphase der Beulfeder 9 eingestellt werden (Figur 2). Das Schaubild in der Figur 3 zeigt die Einstellung der Federkonstanten C-dyn zu C-Tragkörper aufgetragen über der Frequenz in drei Stufen von weich bis hart. Das hier gezeigte Verhalten der Beulfeder 9 kann durch eine eingelagerte schwingende Masse 16 zusätzlich beeinflußt werden, wobei diese in das Material der Beulfeder eingebettete Masse 16 zum Beispiel aus einer im wesentlichen starren Versteifungseinlage gestaltet sein, aber auch aus einem elastischen Werkstoff bestehen kann, welcher ein vom Material der Beulfeder abweichendes spezifisches Gewicht und/oder eine davon abweichende Härte aufweist. Äquivalent wäre eine Beulfeder mit einem starren mittleren Teil und einer elastischen Randzone, die zwischen Druckringen 11 und 12 eingespannt ist, wobei die Spannflächen alternativ zu den gekrümmten Spannflächen der Druckringe nach Figur 1 auch eben gestaltet sein können.

**Patentansprüche**

1. Zweikammerstützlager mit hydraulischer Dämpfung, insbesondere Motorlager in Kraftfahrzeugen, dessen mit Flüssigkeit gefüllte Arbeitskammer (1) und Ausgleichskammer (2) ringförmige Gummiwandungen (3, 4) und in der Wandung der Arbeitskammer zusätzlich eine Beulfeder (9) aufweisen, die am Rand allseits eingespannt ist, sowie durch einen Düsenkanal (8) miteinander verbunden sind, dadurch gekennzeichnet, daß die von der Einspannung umrahmte, ausbeulbare Fläche der Beulfeder (9) in Anpassung an die Betriebsbelastung regelbar veränderbar ist.

2. Zweikammerstützlager nach dem Anspruch 1, dadurch gekennzeichnet, daß die Beulfeder (9) aus einer runden Membranscheibe besteht, deren Einspannung am Rand im Durchmesser über ein Stellglied (10, 13) von außen veränderbar ist.

3. Zweikammerstützlager nach den Ansprüchen 1 und 2, dadurch gekennzeichnet, daß der elastische Rand der Beulfeder (9) zwischen zwei axial im Abstand zueinander einstellbaren Druckringen (11, 12) eingespannt ist, wobei die Spannflächen (14, 15) der beiden Druckringe (11, 12) mit der Mittelebene der Membranscheibe einen mit dem Scheitel nach außen weisenden Winkel einschließen.

4. Zweikammerstützlager nach Anspruch 3, dadurch gekennzeichnet, daß die Spannflächen (14, 15) der Druckringe (11, 12) im Querschnitt gekrümmt sind, wobei der Abstand von der Mittelebene der Membranscheibe (9) von außen nach innen zunimmt.

5. Zweikammerstützlager nach den Ansprüchen 1 bis 4, dadurch gekennzeichnet, daß der eine Druckring (11) im Gehäuse fest und der andere Druckring (12) mittels einer Schraube (13) von außen gegen den festen Druckring (11) verstellbar ist.

6. Zweikammerstützlager nach Anspruch 5, dadurch gekennzeichnet, daß die Schraube (13) mit einem seitlich herausragenden Betätigungsorgan (10) verbunden ist.

**Revendications**

1. Support de montage à double chambre et à amortissement hydraulique, en particulier pour supports de moteurs de véhicules automobiles, dont la chambre de travail (1) et la chambre de compensation (2) emplies de liquide, comportent des parois en caoutchouc (3, 4) et en supplément, un ressort de flexion (9) dans la paroi de la chambre de travail, qui est serré de tous côtés sur le bord, et sont reliées entre elles par un canal de buse (8), caractérisé en ce que la surface du ressort de flexion (4) pouvant être fléchie, encadrée par la fixation, est variable de façon réglable pour s'adapter à la charge de fonctionnement.

2. Support de montage à double chambre selon la revendication 1, caractérisé en ce que le ressort de flexion (9) est constitué d'un disque à membrane circulaire dont le diamètre de serrage sur le bord, est réglable de l'extérieur, par un organe de positionnement (10, 13).

3. Support de montage à double chambre selon les revendications 1 et 2, caractérisé en ce que le bord élastique du ressort de flexion (9) est serré entre deux anneaux de pression (11, 12), d'écartement axial réglable, les faces de serrage (14, 15) des deux anneaux de pression (11, 12) formant, avec le plan médian du disque à membrane, un angle dont le sommet est dirigé vers l'extérieur.

4. Support de montage à double chambre selon la revendication 3, caractérisé en ce que les faces de serrage (14, 15) des anneaux de pression (11, 12) sont de section transversale cintrée, la distance par rapport au plan médian du disque à membrane (9) augmentant de l'extérieur vers l'intérieur.

5. Support de montage à double chambre selon l'une quelconque des revendications 1 à 4, caractérisé en ce qu'un anneau de pression (11) est fixe dans le boîtier et en ce que l'autre anneau de pression (12) est réglable de l'extérieur, contre l'anneau de pression (11) fixe, à l'aide d'une vis (13).

6. Support de montage à double chambre selon la revendication 5, caractérisé en ce que la vis (13) est reliée à un organe d'actionnement (10), ressortant latéralement.

**Claims**

1. Double chamber support bearing with hydraulic damping, in particular a motor bearing in motor vehicles, whose fluid-filled working chamber (1) and equalising chamber (2) have annular rubber walls (3, 4) and additionally a buckle spring (9) in the wall of the working chamber, which spring is stressed on all sides at the edge, the working chamber (1) and equalising chamber (2) being connected together via a nozzle channel (8), characterised in that the surface of the spring (9) enclosed by the clamping device and capable of being buckled can be varied by way of adjustment in accordance with the operating load.

2. Double support bearing according to claim 1, characterised in that the buckle spring (9) consists of a round membrane disc, whose clamping at the edge is variable in diameter from the outside via an adjusting member (10, 13).

3. Double support bearing according to claims 1 and 2, characterised in that the elastic edge of the buckle spring (9) is clamped between two pressure rings (11, 12) which may be set axially at a distance from one another, the clamping faces (14, 15) of the two pressure rings (11, 12) forming with the central plane of the membrane disc an angle whose apex points outwards.

4. Double support bearing according to claim 3, characterised in that the clamping faces (14, 15) of the pressure rings (11, 12) are curved in cross-section, the distance from the central plane of the membrane disc (9) increasing from the outside inwards.

5. Double support bearing according to claims 1 to 4, characterised in that the one pressure ring (11) is fixed in the housing and the other pressure ring (12) is adjustable from the outside relative to the fixed pressure ring (11) by means of a screw (13).

6. Double support bearing according to claim 5, characterised in that the screw (13) is connected to a laterally projecting actuating element (10).

Fig. 1

Fig. 2

Beulfedereinstellung
1.) weich
2.) mittel
3.) hart

Fig. 3